# FASCICULE DE BREVET EUROPEEN

(11) **EP 1 345 804 B1**
(45) Date de publication et mention de la délivrance du brevet: **29.08.2007**
(21) Numéro de dépôt: 01994887.6
(22) Date de dépôt: 14.12.2001
(51) Int. Cl.: B62D 1/184

(54) **DISPOSITIF DE SERRAGE D'UN ELEMENT REGLABLE PAR RAPPORT A UN ENSEMBLE SUPPORT**
VORRICHTUNG ZUM FESTKLEMMEN EINES EINSTELLBAREN ELEMENTS BEZÜGLICH EINER STÜTZANORDNUNG
DEVICE FOR CLAMPING AN ADJUSTABLE ELEMENT RELATIVE TO A SUPPORT ASSEMBLY

(30) Priorité: 26.12.2000 FR 0017256
(43) Date de publication de la demande: 24.09.2003
(73) Titulaire: NACAM FRANCE SA, 41000 Vendôme (FR)
(72) Inventeur: LAISEMENT, André, F-41290 La Chapelle Encherie (FR); ANTIGNY, Sylvain, F-37160 Buxeuil (FR)
(74) Mandataire: Chassagnon, Jean-Alain
(86) Numéro de dépôt international: PCT/FR2001/004026
(87) Numéro de publication internationale: WO 2002/051689

(56) Documents cités:
- FR-A- 2 778 704

## Description

La présente invention se rapporte à un dispositif de serrage d'un système de réglage en position d'un premier élément par rapport à un ensemble support considéré comme fixe. Le dispositif de serrage a un axe de serrage, qui est sensiblement perpendiculaire à l'axe du premier élément et aux deux montants de l'ensemble support entre lesquels est disposé ledit premier élément. Ce dispositif de serrage d'un système de réglage en position est notamment applicable à une colonne de direction de véhicule automobile, cette colonne de direction étant réglable en hauteur et/ou en profondeur dans le plan vertical.

Il existe des colonnes de direction réglables en hauteur ou en profondeur, ou en hauteur et en profondeur qui possèdent un système de réglage en position de la colonne de direction par rapport à un élément support relié au châssis du véhicule automobile. Ce système de réglage en position est muni d'un dispositif de serrage, qui permet d'avoir deux positions : une position débloquée ou déverrouillée pour permettre le réglage de la colonne de direction à la position voulue, et une position bloquée ou verrouillée, une fois cette position choisie. Dans les systèmes connus, le dispositif de serrage du système de réglage de la colonne de direction du véhicule automobile a une tige de serrage ayant comme axe l'axe de serrage, qui est disposée en dessous du premier élément ou tube-corps de la colonne de direction. Ce dispositif de serrage a une poignée de manoeuvre et un ensemble de blocage par exemple à came qui sont disposés à une des extrémités de la tige de serrage. Cette tige de serrage traverse les deux montants de l'ensemble support. Ce type d'ensemble support et d'architecture présente un encombrement gênant, tant pour la difficulté d'implantation d'une colonne de direction dans une architecture véhicule quand la tige de serrage se trouve placée au dessus de la colonne, que pour la sécurité du conducteur en cas d'accident avec le choc des genoux dans ce support, quand la tige de serrage est positionnée sous la colonne.

Le but de la présente invention est de proposer un dispositif de serrage qui évite les inconvénients décrits ci-dessus, et dont l'axe de serrage peut être disposé à une position quelconque, qui ne tienne pas compte de l'encombrement de la colonne de direction, afin de pouvoir dégager la zone située en dessous de cette colonne de direction.

Selon un mode de réalisation de l'invention, le dispositif de serrage se rapporte à un système de réglage en position d'un élément par rapport à un ensemble support considéré comme fixe. L'élément a un axe et l'ensemble support est constitué par deux montants reliés l'un à l'autre par un élément de raccordement. Les deux montants sont sensiblement parallèles l'un par rapport à l'autre. L'élément est disposé à l'intérieur des deux montants de l'ensemble support, de manière que les deux montants soient sensiblement parallèles à l'axe de l'élément. Ledit système de réglage en position est bloqué à la position choisie par ledit dispositif de serrage, dont l'axe de serrage est sensiblement perpendiculaire aux deux montants et à l'axe de l'élément.

Le dispositif de serrage comporte :
- un étrier constitué par :
   . une embase disposée à l'extérieur de l'un des montants, et
   . deux tirants traversant les deux montants
- un élément de fermeture et d'appui disposé à l'extérieur de l'autre montant, ledit élément de fermeture et d'appui reliant les deux tirants.

Ces caractéristiques de la première partie de la revendication 1 sont connues du brevet FR-A-2 778 704.

L'invention est caractérisée en ce que
- ledit élément de fermeture est un élément d'appui qui s'appuie sur une face externe de l'autre montant, ledit élément de fermeture et d'appui reliant les deux tirants avec des moyens d'assemblage;
- une tige externe de serrage qui est montée sur l'embase et dont l'axe est l'axe de serrage ;
- un ensemble de blocage monté sur la tige externe de serrage qui est montée à l'extérieur du montant de l'ensemble support ;
- un élément intermédiaire d'appui, qui est monté sur la tige externe de serrage et qui est disposé entre l'embase de l'étrier et l'ensemble de blocage, ledit élément intermédiaire d'appui prenant appui sur une face externe du montant situé du côté de l'embase de l'étrier;
- un ensemble de tenue axiale de l'ensemble de blocage, qui est monté et fixé sur la tige externe de serrage, et qui est disposé à l'extérieur dudit ensemble de blocage;
- ledit ensemble de tenue axiale étant réglé suivant l'axe de serrage, de manière qu'en position verrouillée du dispositif de serrage :
   l'ensemble de blocage s'appuie d'une part sur une face externe de l'élément intermédiaire d'appui, qui est repoussé contre la face externe du montant situé du côté de l'embase de l'étrier : et
   . que l'ensemble de blocage pousse d'autre part sur une face interne de l'ensemble de tenue axiale, afin de tirer sur la tige externe de serrage, qui entraîne l'étrier avec l'élément de fermeture et d'appui, qui prend appui et repousse la face externe du montant correspondant ; de manière à rapprocher les deux montants l'un de l'autre pour assurer le serrage demandé.

Selon l'invention, l'étrier peut avoir plusieurs types de réalisation. Dans un premier type de réalisation, l'étrier est obtenu de manière que l'embase et les deux tirants constituent un seul et même élément monobloc. Dans un deuxième type de réalisation, l'étrier est obtenu à partir de l'embase et des deux tirants qui sont réunis par des moyens d'assemblage.

Avantageusement selon l'invention, les moyens d'assemblage de l'embase et des deux tirants consistent en deux goupilles, chacune des deux goupilles pénétrant à force dans un trou aménagé à l'extrémité du tirant correspondant et pénétrant à force dans un trou aménagé du côté correspondant de l'embase. Les moyens d'assemblage peuvent également être deux vis ou deux rivets intégrés ou non à l'embase pour assurer leur tenue en position.

Selon un mode de réalisation de l'invention, les moyens d'assemblage de l'élément de fermeture et d'appui et des deux tirants consistent en deux goupilles, chacune des deux goupilles pénétrant à force dans un trou aménagé à l'extrémité du tirant correspondant et pénétrant à force dans un trou aménagé du côté correspondant de l'élément de fermeture et d'appui.

Dans une réalisation de l'invention, la tige externe de serrage est solidaire de l'embase afin de constituer un seul et même élément monobloc. Dans une autre réalisation de l'invention, la tige externe de serrage est montée dans un trou de passage aménagé dans l'embase, ladite tige externe de serrage étant munie d'une tête venant buter contre ladite embase.

Selon un mode de réalisation de l'invention, l'élément de fermeture et d'appui comporte au moins deux montants d'appui qui se font face l'un l'autre et qui viennent s'appliquer contre la face externe du montant correspondant. Chacun des deux montants d'appui reçoit les moyens d'assemblage avec l'extrémité du tirant correspondant.

Avantageusement selon l'invention, l'élément intermédiaire d'appui comporte deux montants d'appui qui se font face l'un l'autre et qui viennent s'appliquer contre la face externe du montant correspondant en entourant l'embase de l'étrier.

Selon une réalisation de l'invention, l'ensemble de tenue axiale comporte une butée avec un écrou et un contre-écrou qui sont vissés sur l'extrémité filetée de la tige externe de serrage.

Dans un type de réalisation de l'invention, l'ensemble de blocage comporte :
- une came interne fixe en rotation par rapport à l'élément intermédiaire d'appui, et
- une came externe mobile en rotation à l'aide d'une poignée de serrage.

Dans un premier type de réalisation d'une architecture complète selon l'invention :
- l'élément est un tube-corps de colonne de direction de véhicule automobile, dont l'axe est l'axe de direction et dans lequel un arbre de direction est monté tournant ;
- l'ensemble support est raccordé au châssis du véhicule ;
- le tube-corps comporte un dispositif d'encastrement entre les deux montants de l'ensemble support ;
- ledit dispositif d'encastrement consiste :
   - en un élément rapporté à section rectangulaire ayant une portion verticale et deux portions horizontales qui sont soudées l'une et l'autre audit tube-corps, la portion verticale ayant une face d'appui s'appliquant contre le montant correspondant de l'ensemble support, et
   - en un élément rapporté plein soudé audit tube-corps, l'élément rapporté plein ayant la face interne qui s'applique contre ledit tube-corps, et dont la face externe verticale est la face d'appui s'appliquent contre l'autre montant de l'ensemble support.

Dans un deuxième type de réalisation d'une architecture complète selon l'invention :
- l'élément est un tube-corps de colonne de direction de véhicule automobile, dont l'axe est l'axe de direction et dans lequel un arbre de direction est monté tournant ;
- l'ensemble support est raccordé au châssis du véhicule ;
- le tube-corps comporte un dispositif d'encastrement entre les deux montants de l'ensemble support ;
- ledit dispositif d'encastrement consiste :
   - en un élément rapporté plein soudé audit tube-corps, l'élément rapporté plein ayant la face interne qui s'applique contre ledit tube-corps, et dont la face externe verticale est la face d'appui s'appliquent contre le montant correspondant de l'ensemble support, et
   - en une seule et même cale ; ladite cale étant reliée et montée directement sur l'autre montant de l'ensemble support, la cale comportant deux faces de guidage inclinées l'une par rapport à l'autre, qui sont agencées en creux sur sa face externe ;
   - le montant correspondant de l'ensemble support comporte également deux faces inclinées, l'une par rapport à l'autre, qui sont agencées en relief sur sa face interne, lesdites faces inclinées en relief coopérant avec les faces inclinées en creux de la cale, afin de garantir l'antirotation autour de l'axe de serrage.

Le dispositif de serrage du système de réglage d'une colonne de direction de véhicule automobile selon l'invention présente ainsi l'avantage d'avoir un axe de serrage qui est situé dans l'encombrement vertical du tube-corps, ce qui donne un encombrement réduit par rapport aux dispositifs connus. Cet aspect essentiel de l'invention permet de dégager les zones situées au dessus et en dessous de la colonne de direction, ce qui augmente la sécurité du conducteur en cas d'accident. De plus, ce dispositif de serrage peut s'adapter facilement sur les colonnes de direction existantes.

D'autres avantages de la présente invention apparaîtront plus clairement à la lecture de la description suivante de plusieurs réalisations préférées de l'invention en référence aux dessins annexés correspondants dans lesquels :
- la figure 1 est une vue de dessous d'un dispositif de serrage selon l'invention d'une colonne de direction de véhicule automobile, la vue étant suivant l'axe de direction ;
- la figure 2 est une coupe transversale suivant le plan II-II de la figure 1 ;
- la figure 3 est une vue éclatée en perspective des différents éléments du dispositif de serrage représenté sur les figures 1 et 2 ;
- la figure 4 est une coupe suivant le plan de l'axe de direction perpendiculaire au plan vertical d'un autre mode de réalisation de l'invention ;
- la figure 5 est une coupe transversale suivant le plan V-V de la figure 4.

Le dispositif de serrage selon l'invention se rapporte à un système de réglage en position 7 d'un premier élément par rapport à un ensemble support 6 comme cela est représenté sur les différentes figures. Le premier élément est un tube-corps de colonne de direction de véhicule automobile dans lequel est monté tournant un arbre de direction 1 dont l'axe est un axe de direction 3. Le plan vertical passant par l'axe de direction 3 est référencé 2.

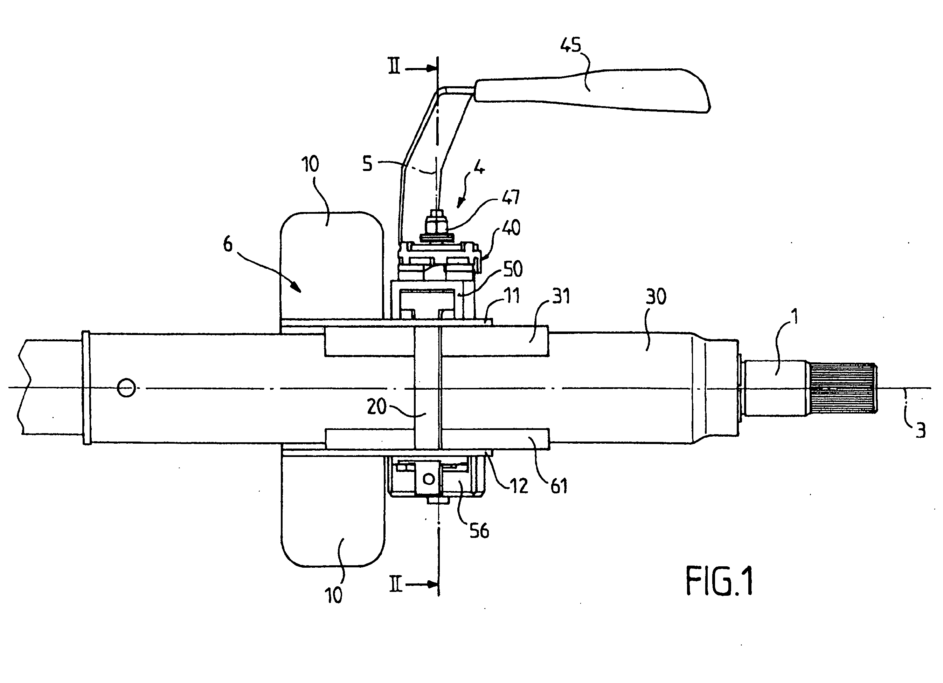

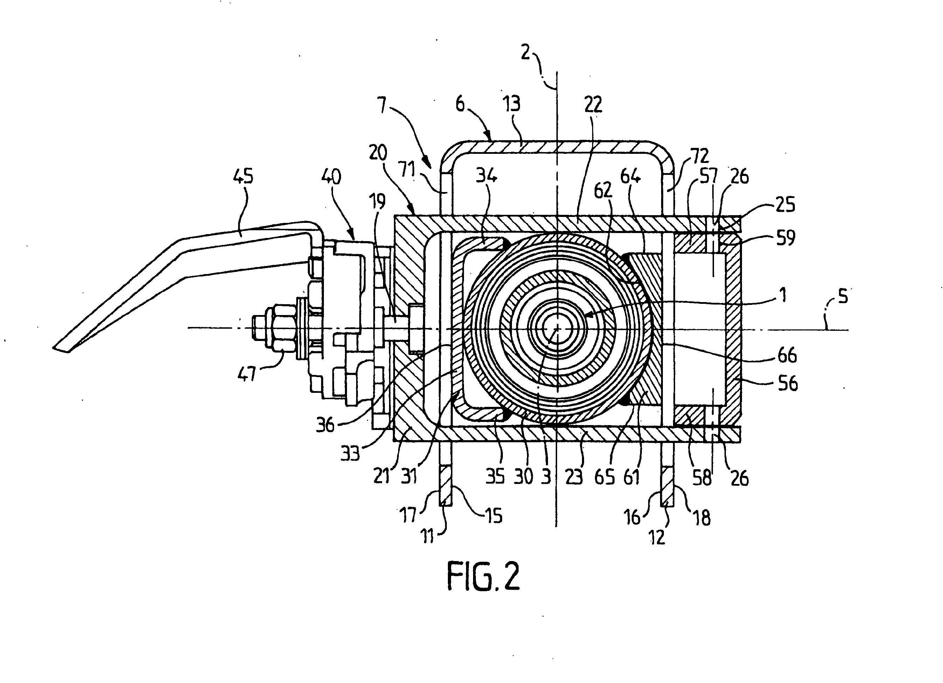

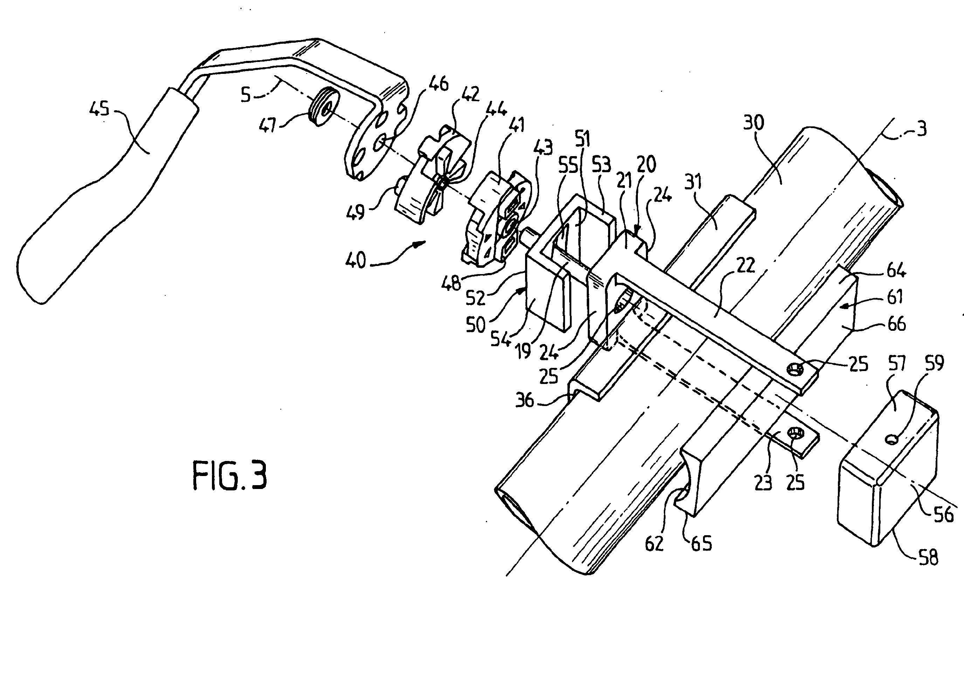

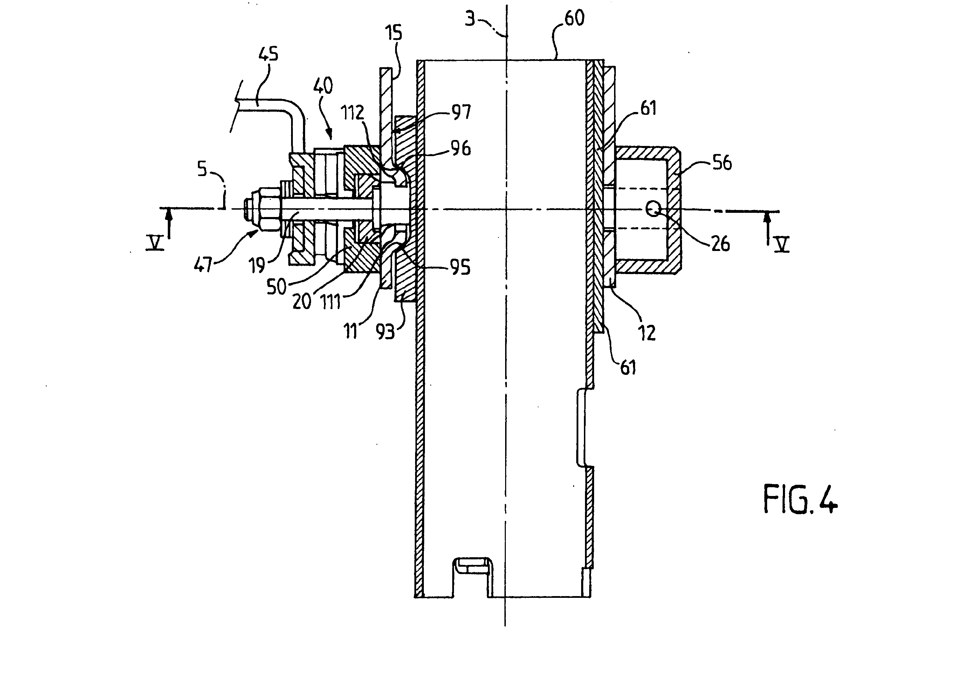

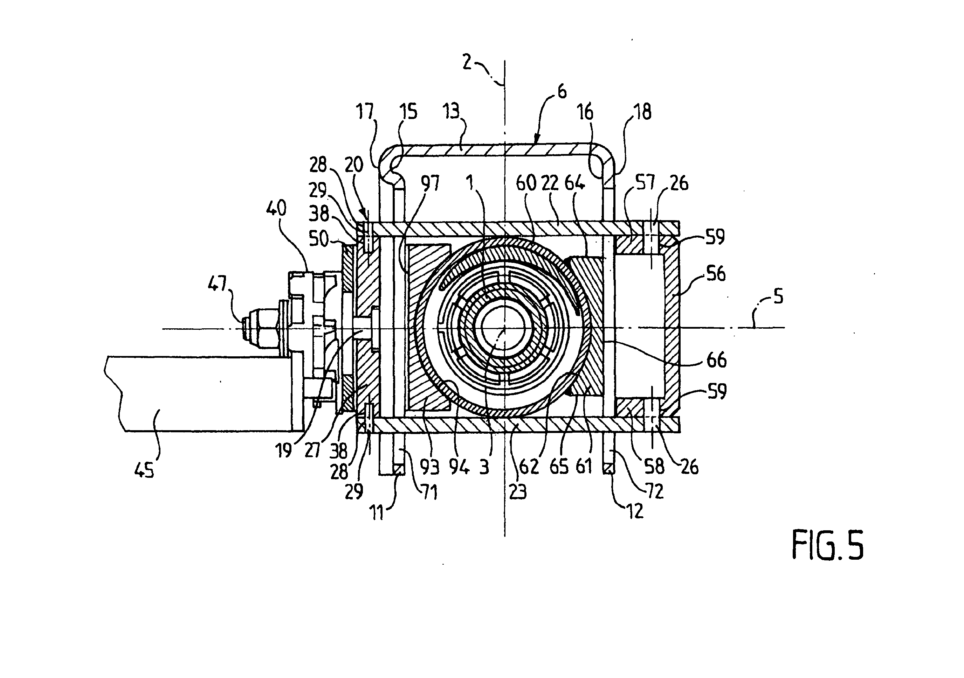

Selon l'invention, le tube-corps peut avoir différentes structures, dont la structure représentée sur les figures 1, 2 et 3 avec le tube-corps 30, ou la structure représentée sur les figures 4 et 5 avec le tube-corps 60.

Dans toutes les figures 1 à 5, l'ensemble support 6 est raccordé au châssis 10 du véhicule, et il est considéré comme fixe. L'ensemble support 6 comporte deux montants 11 et 12, qui sont sensiblement parallèles l'un par rapport à l'autre, et qui sont sensiblement parallèles au plan vertical 2 de l'axe de direction 3. Les montants 11 et 12 sont reliés l'un à l'autre par un élément de raccordement 13. Le premier élément ou tube-corps 30 ou 60 est disposé entre les deux montants 11 et 12, et l'axe de direction 3 est dans le plan vertical 2.

Dans la suite de la description et pour un même élément, on appellera interne ou intérieur par rapport à l'axe de direction 3 de l'élément 30 ou 60, ce qui est plus près de ces axe de direction 3, et externe ou extérieur ce qui est le plus éloigné. Ainsi le montant 11 de l'ensemble support 6 a une face interne 15 et une face externe 17 par rapport à l'axe de direction 3. De même le montant 12 a une face interne 16, et une face externe 18 par rapport à ce même axe de direction 3. De plus, le montant 11 possède une fente 71 qui est orientée dans le sens du réglage du système de réglage en position 7. Le montant 12 possède également une fente 72 qui est orientée de la même façon dans le sens du réglage.

Le dispositif de réglage en position 7 est bloqué à la position choisie par le dispositif de serrage selon l'invention. Le dispositif de serrage a un axe de serrage 5, qui est sensiblement perpendiculaire au plan vertical 2 de l'axe de direction 3. L'axe de serrage 5 est également sensiblement perpendiculaire aux deux montants 11 et 12 de l'ensemble support 6. Le dispositif de serrage a deux positions : une position déverrouillée dans laquelle le dispositif de serrage est débloqué pour permettre le réglage demandé de la colonne de direction, et une position verrouillée dans laquelle le dispositif de serrage est bloqué pour garantir le maintien de la position choisie.

D'après l'invention, et comme cela est représenté sur les différentes figures, le dispositif de serrage comporte essentiellement :
- un étrier 20, qui est disposé à l'extérieur de l'un des montants par exemple le montant 11, l'étrier 20 traversant les deux montants 11 et 12 ;
- un élément de fermeture de l'étrier 20, qui est disposé à l'extérieur de l'un des montants par exemple le montant 12, cet élément est un élément de fermeture et d'appui 56 qui est relié à l'étrier 20 par des moyens d'assemblage, et qui s'appuie sur la face externe du montant correspondant, par exemple la face externe 18 du montant 12 ;
- une tige externe de serrage 19, qui est montée sur l'étrier 20, et dont l'axe est l'axe de serrage 5 ;
- un ensemble de blocage 40, qui est monté sur la tige externe de serrage 19 ;
- un élément intermédiaire d'appui 50 qui est monté sur la tige externe de serrage 19, et qui est disposé entre l'étrier 20 et l'ensemble de blocage 40, ledit élément intermédiaire d'appui 50 prenant appui sur la face externe du montant situé du côté de l'étrier 20, par exemple la face externe 17 du montant 11 ;
- un ensemble de tenue axiale 47 de l'ensemble de blocage 40, ledit ensemble de tenue axiale 47 étant monté et fixé sur la tige externe de serrage 19 et étant disposé à l'extérieur dudit ensemble de blocage 40.

L'ensemble de tenue axiale 47 est réglé suivant l'axe de serrage 5, de manière qu'en position verrouillée du dispositif de serrage .
- l'ensemble de blocage 40 s'appuie d'une part sur une face externe 52 de l'élément intermédiaire d'appui 50, qui est repoussé contre la face externe 17 du montant 11 situé du côté d'une embase 21 ou 27 de l'étrier 20 ; et
- que l'ensemble de blocage 40 pousse d'autre part sur une face interne de l'ensemble de tenue axiale 47, afin de tirer sur la tige externe de serrage 19, qui entraîne l'étrier 20 avec l'élément de fermeture et d'appui 56, qui prend appui et repousse la face externe 18 du montant 12 correspondant ; de manière à rapprocher les deux montants 11, 12 l'un de l'autre pour assurer le serrage demandé.

Dans le mode de réalisation représenté sur les figures 1, 2 et 3, le premier élément est un tube-corps 30 de colonne de direction de véhicule automobile, dont l'axe est l'axe 3 de direction et dans lequel un arbre de direction 1 est monté tournant. L'ensemble support 6 est raccordé au châssis 10 du véhicule.

Le tube-corps 30 comporte un dispositif d'encastrement entre les deux montants 11, 12 de l'ensemble support 6. Ledit dispositif d'encastrement consiste :
- en un élément rapporté 31 à section rectangulaire ayant une portion verticale 33 et deux portions horizontales 34, 35 qui sont soudées l'une et l'autre audit tube-corps 30, la portion verticale 33 ayant une face d'appui 36 s'appliquant contre la face interne 15 du montant 11 correspondant de l'ensemble support 6, et
   - en un élément rapporté plein 61 soudé audit tube-corps 60, l'élément rapporté plein 61 ayant la face interne 62 qui s'applique contre ledit tube-corps 60, et dont la face externe verticale est la face d'appui 66 s'appliquent contre la face interne 16 de l'autre montant 12 de l'ensemble support 6.

L'étrier 20 est constitué par :
- une embase 21 qui est disposée à l'extérieur du montant 11, et
- deux tirants 22 et 23, qui traversent la fente 71 du montant 11 et la fente 72 du montant 12 ; le tirant 22 étant disposé au-dessus du tube-corps 30, et le tirant 23 étant disposé au-dessous dudit tube-corps 30. L'étrier 20 est réalisé de manière que l'embase 21 et les deux tirants 22 et 23 constituent un seul et même élément monobloc.

L'élément de fermeture et d'appui 56 est disposé à l'extérieur de l'autre montant 12. L'élément de fermeture et d'appui 56 prend appui sur la face externe 18 du montant 12. L'élément de fermeture et d'appui 56 relie les deux tirants 22 et 23 avec des moyens d'assemblage.

Les moyens d'assemblage de l'élément de fermeture et d'appui 56 et des deux tirants 22, 23 consistent en deux goupilles 26, chacune des deux goupilles 26 pénétrant à force dans un trou 25 aménagé à l'extrémité du tirant correspondant 22, 23 et pénétrant à force dans un trou 59 aménagé du côté correspondant de l'élément de fermeture et d'appui 56.

La tige externe de serrage 19 est montée dans un trou de passage aménagé dans l'embase 21, ladite tige externe de serrage 19 étant munie d'une tête venant buter contre ladite embase 21.

L'élément de fermeture et d'appui 56 comporte au moins deux montants d'appui 57, 58 qui se font face l'un l'autre et qui viennent s'appliquer contre la face externe 18 du montant 12 correspondant, chacun des deux montants d'appui 57, 58 recevant les moyens d'assemblage avec l'extrémité du tirant 22, 23 correspondant. Selon la réalisation des figures, les montants d'appui 57 et 58 sont reliés par deux autres montants d'appui.

L'élément intermédiaire d'appui 50 comporte deux montants d'appui 53, 54 qui se font face l'un l'autre, et qui viennent s'appliquer contre la face externe 17 du montant 11 correspondant en entourant les faces verticales 24 de l'embase 21, de l'étrier 20. L'élément intermédiaire d'appui 50 comporte une face interne 51 et une face externe 52, ainsi qu'une fente 55.

L'ensemble de tenue axiale 47 comporte une butée avec un écrou et un contre-écrou qui sont vissés sur l'extrémité filetée de la tige externe de serrage 19.

L'ensemble de blocage 40 comporte :
- une came interne 41 fixe en rotation par rapport à l'élément intermédiaire d'appui 50, et
- une came externe 42 mobile en rotation à l'aide d'une poignée de serrage 45.

La came interne 41 est munie d'une protubérance 48 en forme de languette qui s'engage dans la fente 55 de l'élément intermédiaire d'appui 50.

La came externe 42 est munie d'une excroissance 49 qui s'engage dans la poignée de serrage 45.

La came interne 41, la came externe 42, la poignée de serrage 45 se montent sur la tige de serrage 19 à l'aide de trous de passage référencés respectivement 43, 44 et 46.

Dans le mode de réalisation représenté sur les figures 4 et 5, le premier élément est un tube-corps 60 de colonne de direction de véhicule automobile, dont l'axe est l'axe 3 de direction et dans lequel un arbre de direction 1 est monté tournant. L'ensemble support 6 est raccordé au châssis du véhicule 10.

Le tube-corps 60 comporte un dispositif d'encastrement entre les deux montants 11, 12 de l'ensemble support 6.

Ledit dispositif d'encastrement consiste :
- en un élément rapporté plein 61 soudé audit tube-corps 60, l'élément rapporté plein 61 ayant la face interne 62 qui s'applique contre ledit tube-corps 60, et dont la face externe verticale est la face d'appui 66 s'appliquent contre la face interne 16 du montant 12 correspondant de l'ensemble support 6, et
- en une seule et même cale 93 ; ladite cale 93 étant reliée et montée directement sur la face interne 15 de l'autre montant 11 de l'ensemble support 6, la cale 93 comportant deux faces de guidage 95, 96 inclinées l'une par rapport à l'autre, qui sont agencées en creux sur sa face externe 97 ;
- le montant 11 correspondant de l'ensemble support 6 comporte également deux faces 111, 112 inclinées, l'une par rapport à l'autre, qui sont agencées en relief sur sa face interne 15, lesdites faces inclinées 111, 112 en relief coopérant avec les faces inclinées 95, 96 en creux de la cale 93, afin de garantir l'antirotation autour de l'axe de serrage 5.

L'étrier 20 est constitué par :
- une embase 27 qui est disposée à l'extérieur du montant 11, et
- deux tirants 22 et 23 qui traversent la fente 71 du montant 11 et la fente 72 du montant 12 ; le tirant 22 étant disposé au-dessus du tube-corps 60, et le tirant 23 étant disposé au-dessous dudit tube corps 60. L'étrier 20 est réalisé de manière que l'embase 27 et les deux tirants 22 et 23 soient réunis par des moyens d'assemblage.

Les moyens d'assemblage de l'embase 27 et des deux tirants 22, 23 consistent en deux goupilles 29, chacune des deux goupilles 29 pénétrant à force dans un trou 28 aménagé à l'extrémité du tirant 22, 23 correspondant et pénétrant à force dans un trou 38 aménagé du côté correspondant de l'embase 27. Les moyens d'assemblage peuvent également être deux vis ou deux rivets intégrés ou non à l'embase pour assurer leur tenue en position.

L'élément de fermeture et d'appui 56 est disposé à l'extérieur de l'autre montant 12. L'élément de fermeture et d'appui 56 prend appui sur la face externe 18 du montant 12. L'élément de fermeture et d'appui 56 relie les deux tirants 22 et 23 avec des moyens d'assemblage.

Les moyens d'assemblage de l'élément de fermeture et d'appui 56 et des deux tirants 22, 23 consistent en deux goupilles 26, chacune des deux goupilles 26 pénétrant à force dans un trou 25 aménagé à l'extrémité du tirant correspondant 22, 23 et pénétrant à force dans un trou 59 aménagé du côté correspondant de l'élément de fermeture et d'appui 56.

La tige externe de serrage 19 est solidaire de l'embase 27, afin de constituer un seul et même élément monobloc. La liaison peut être réalisée par exemple par soudure.

La tige externe de serrage 19 est montée dans un trou de passage aménagé dans l'embase 27, ladite tige externe de serrage 19 étant munie d'une tête venant buter contre ladite embase 27 ; ladite tête étant soudée sur l'embase 27.

L'élément de fermeture et d'appui 56 comporte au moins deux montants d'appui 57, 58 qui se font face l'un l'autre et qui viennent s'appliquer contre la face externe 18 du montant 12 correspondant, chacun des deux montants d'appui 57, 58 recevant les moyens d'assemblage avec l'extrémité du tirant 22, 23 correspondant. Selon la réalisation des figures, les montants d'appui 57 et 58 sont reliés par deux autres montants d'appui.

L'élément intermédiaire d'appui 50 comporte deux montants d'appui 53, 54 qui se font face l'un l'autre, et qui viennent s'appliquer contre la face externe 17 du montant 11 correspondant en entourant l'embase 27 de l'étrier 20.

L'ensemble de tenue axiale 47 comporte une butée avec un écrou et un contre-écrou qui sont vissés sur l'extrémité filetée de la tige externe de serrage 19.

L'ensemble de blocage 40 comporte :
- une came interne 41 fixe en rotation par rapport à l'élément intermédiaire d'appui 50, et
- une came externe 42 mobile en rotation à l'aide d'une poignée de serrage 45.

Selon l'invention, le dispositif d'encastrement du tube-corps entre les deux montants 11 et 12 peut avoir n'importe quelle structure et notamment celles décrites dans la demande de brevet français N° 0016622 déposée le 18/12/2000 au nom de la demanderesse.

## Revendications

1. - Dispositif de serrage d'un système de réglage en position (7) d'un élément (30, 60) par rapport à un ensemble support (6) considéré comme fixe, l'élément (30, 60) ayant un axe (3) et l'ensemble support (6) étant constitué par deux montants (11, 12) reliés l'un à l'autre par un élément de raccordement (13), les deux montants (11, 12) étant sensiblement parallèles l'un par rapport à l'autre ; l'élément (30, 60) étant disposé à l'intérieur des deux montants (11, 12) de l'ensemble support (6), de manière que les deux montants (11, 12) soient sensiblement parallèles à l'axe (3) de l'élément (30, 60) ; ledit système de réglage en position (7) est bloqué à la position choisie par ledit dispositif de serrage, dont l'axe de serrage (5) est sensiblement perpendiculaire aux deux montants (11, 12) et à l'axe (3) de l'élément (30, 60) ; ledit dispositif de serrage comportant :
- un étrier (20) constitué par :
. une embase (21, 27) disposée à l'extérieur de l'un des montants (11), et
. deux tirants (22, 23) traversant les deux montants (11, 12) ;
- un élément de fermeture (56) disposé à l'extérieur de l'autre montant (12), ledit élément de fermeture (56) reliant les deux tirants (22, 23), **caractérisé en ce que :**
- ledit élément de fermeture (56) est un élément d'appui qui s'appuie sur une face externe (18) de l'autre montant (12), ledit élément de fermeture et d'appui (56) reliant les deux tirants (22, 23) avec des moyens d'assemblage (26);
- une tige externe de serrage (19) qui est montée sur l'embase (21, 27) et dont l'axe est l'axe de serrage (5) ;
- un ensemble de blocage (40) monté sur la tige externe de serrage (19), qui est montée à l'extérieur du montant (11) de l'ensemble support (6) ;
- un élément intermédiaire d'appui (50), qui est monté sur la tige externe de serrage (19) et qui est disposé entre l'embase (21, 27) de l'étrier (20) et l'ensemble de blocage (40), ledit élément intermédiaire d'appui (50) prenant appui sur une face externe (17) du montant (11) situé du côté de l'embase (21, 27) de l'étrier (20) ;
- un ensemble de tenue axiale (47) de l'ensemble de blocage (40), qui est monté et fixé sur la tige externe de serrage (19), et qui est disposé à l'extérieur dudit ensemble de blocage (40) ;
- ledit ensemble de tenue axiale (47) étant réglé suivant l'axe de serrage (5), de manière qu'en position verrouillée du dispositif de serrage :
. l'ensemble de blocage (40) s'appuie d'une part sur une face externe (52) de l'élément intermédiaire d'appui (50), qui est repoussé contre la face externe (17) du montant (11) situé du côté de l'embase (21, 27) de l'étrier (20) ; et
. que l'ensemble de blocage (40) pousse d'autre part sur une face interne de l'ensemble de tenue axiale (47), afin de tirer sur la tige externe de serrage (19), qui entraîne l'étrier (20) avec l'élément de fermeture et d'appui (56), qui prend appui et repousse la face externe (18) du montant (12) correspondant ; de manière à rapprocher les deux montants (11, 12) l'un de l'autre pour assurer le serrage demandé.

2. - Dispositif de serrage selon la revendication 1, **caractérisé en ce que** l'étrier (20) est réalisé de manière que l'embase (21) et les deux tirants (22, 23) constituent un seul et même élément monobloc.

3. - Dispositif de serrage selon la revendication 1, **caractérisé en ce que** l'étrier 20 est réalisé à partir de l'embase (27) et des deux tirants (22, 23) qui sont réunis par des moyens d'assemblage (29).

4. - Dispositif de serrage selon la revendication 1, **caractérisé en ce que** les moyens d'assemblage de l'élément de fermeture et d'appui (56) et des deux tirants (22, 23) consistent en deux goupilles (26), chacune des deux goupilles (26) pénétrant à force dans un trou (25) aménagé à l'extrémité du tirant correspondant (22, 23) et pénétrant à force dans un trou (59) aménagé du côté correspondant de l'élément de fermeture et d'appui (56).

5. - Dispositif de serrage selon la revendication 3, **caractérisé en ce que** les moyens d'assemblage de l'embase (27) et des deux tirants (22, 23) consistent en deux goupilles (29), chacune des deux goupilles (29) pénétrant à force dans un trou (28) aménagé à l'extrémité du tirant (22, 23) correspondant et pénétrant à force dans un trou 38 aménagé du côté correspondant de l'embase (27).

6. - Dispositif de serrage selon la revendication 1, **caractérisé en ce que** la tige externe de serrage (19) est solidaire de l'embase (21, 27) afin de constituer un seul et même élément monobloc.

7. - Dispositif de serrage selon la revendication 1, **caractérisée en ce que** la tige externe de serrage (19) est montée dans un trou de passage aménagé dans l'embase (21, 27), ladite tige externe de serrage (19) étant munie d'une tête venant buter contre ladite embase (21, 27).

8. - Dispositif de serrage selon la revendication 1, **caractérisé en ce que** l'élément de fermeture et d'appui (56) comporte au moins deux montants d'appui (57, 58) qui se font face l'un l'autre et qui viennent s'appliquer contre la face externe (18) du montant (12) correspondant, chacun des deux montants d'appui (57, 58) recevant les moyens d'assemblage avec l'extrémité du tirant (22, 23) correspondant.

9. - Dispositif de serrage selon la revendication 1, **caractérisé en ce que** l'élément intermédiaire d'appui (50) comporte deux montants d'appui (53, 54) qui se font face l'un l'autre, et qui viennent s'appliquer contre la face externe (17) du montant (11) correspondant en entourant l'embase (21, 27) de l'étrier (20).

10. - Dispositif de serrage selon la revendication 1, **caractérisé en ce que** l'ensemble de tenue axiale (47) comporte une butée avec un écrou et un contre-écrou qui sont vissés sur l'extrémité filetée de la tige externe de serrage (19).

11. - Dispositif de serrage selon la revendication 1, **caractérisé en ce que** l'ensemble de blocage (40) comporte :
- une came interne (41) fixe en rotation par rapport à l'élément intermédiaire d'appui (50), et
- une came externe (42) mobile en rotation à l'aide d'une poignée de serrage (45).

12. - Dispositif de serrage selon la revendication 1, **caractérisé en ce que** :
- l'élément est un tube-corps (30) de colonne de direction de véhicule automobile, dont l'axe est l'axe (3) de direction et dans lequel un arbre de direction (1) est monté tournant ;
- l'ensemble support (6) est raccordé au châssis (10) du véhicule ;
- le tube-corps (30) comporte un dispositif d'encastrement entre les deux montants (11, 12) de l'ensemble support (6) ;
- ledit dispositif d'encastrement consiste :
. en un élément rapporté (31) à section rectangulaire ayant une portion verticale (33) et deux portions horizontales (34, 35) qui sont soudées l'une et l'autre audit tube-corps (30), la portion verticale (33) ayant une face d'appui (36) s'appliquant contre la face interne 15 du montant (11) correspondant de l'ensemble support (6), et
. en un élément rapporté plein (61) soudé audit tube-corps (60), l'élément rapporté plein (61) ayant la face interne (62) qui s'applique contre ledit tube-corps (60), et dont la face externe verticale est la face d'appui (66) s'appliquent contre la face interne 16 de l'autre montant (12) de l'ensemble support.

13. - Dispositif de serrage selon la revendication 1, **caractérisé en ce que** :
- l'élément est un tube-corps (60) de colonne de direction de véhicule automobile, dont l'axe est l'axe (3) de direction et dans lequel un arbre de direction (1) est monté tournant ;
- l'ensemble support (6) est raccordé au châssis du véhicule (10) ;
- le tube-corps (60) comporte un dispositif d'encastrement entre les deux montants (11, 12) de l'ensemble support (6) ;
- ledit dispositif d'encastrement consiste :
. en un élément rapporté plein (61) soudé audit tube-corps (60), l'élément rapporté plein (61) ayant la face interne (62) qui s'applique contre ledit tube-corps (60), et dont la face externe verticale est la face d'appui (66) s'appliquent contre la face interne (16) du montant (12) correspondant de l'ensemble support (6), et
. en une seule et même cale (93) ; ladite cale (93) étant reliée et montée directement sur la face interne (15) de l'autre montant (11) de l'ensemble support (6), la cale (93) comportant deux faces de guidage (95, 96) inclinées l'une par rapport à l'autre, qui sont agencées en creux sur sa face externe (97) ;
. montant (11) correspondant de l'ensemble support (6) comporte également deux faces (111, 112) inclinées, l'une par rapport à l'autre, qui sont agencées en relief sur sa face interne (15), lesdites faces inclinées (111, 112) en relief coopérant avec les faces inclinées (95, 96) en creux de la cale (93), afin de garantir l'antirotation autour de l'axe de serrage (5).

## Claims

1. - A clamping device of a system (7) for adjusting position of a member (30, 60) relative to a support assembly (6) considered as fixed, the member (30, 60) having an axis (3) and the support assembly (6) consisting of two uprights (11, 12) connected to each other by a connecting member (13), the two uprights (11, 12) being substantially parallel to each other ; the member (30, 60) being disposed inside the two uprights (11, 12) of the support assembly (6), so that the two uprights (11, 12) are substantially parallel to the axis (3) of the member (30, 60) ; said position adjusting system (7) is locked in the selected position by said clamping device, whose clamping axis (5) is substantially perpendicular to the two uprights (11, 12) and to the axis (3) of the member (30, 60), said clamping device including:
- a bracket (20) consisted of:
. a base (21, 27) disposed outside one of the uprights (11), and
. two tie-rods (22, 23) passing through the two uprights (11, 12) ;
- a closure member (56) disposed outside the other upright (12), said closure member (56) connecting the two tie-rods (22, 23), **characterized in that**:
- said closure member (56) is a bearing member which bears on an external face (18) of the other upright (12), said closure and bearing member (56) connecting the two uprights (22, 23) with assembly means (26) ;
- an external clamping rod (19) that is mounted on the base (21, 27) and whose axis is the clamping axis (5) ;
- a locking assembly (40) mounted on the external clamping rod (19) that is mounted outside the upright (11) of the support assembly (6) ;
- an intermediate bearing member (50) that is mounted on the external clamping rod {19) and that is disposed between the base (21, 27) of the bracket (20) and the locking assembly (40), said intermediate bearing member (50) bearing on an external face (17) of the upright (11) situated on the same side as the base (21, 27) of the bracket (20) ;
- an axial retention assembly (47) for the locking assembly (40) that is mounted on and fixed to the external clamping rod (19), and that is disposed outside said locking assembly (40) ;
- said axial retention assembly (47) being adjusted along the clamping axis (5) so that in the locked position of the clamping device:
. the locking assembly (40) bears on an external face (52) of the intermediate bearing member (50), which is pushed against the external face (17) of the upright (11) on the same side as the base (21, 27) of the bracket (20) ; and
. the locking assembly (40) also pushes on an internal face of the axial retention assembly (47), in order to pull on the external clamping rod (19), which moves the bracket (20) with the closure and bearing member (56), which bears on and pushes back the external face (18) of the corresponding upright (12) to move the two uprights (11, 12) toward each other to provide the required clamping.

2. - A clamping device according to claim 1, **characterized in that** the bracket (20) is made so that the base (21) and the two tie-rods (22, 23) constitute a one-piece component.

3. - A clamping device according to claim 1, **characterized in that** the bracket (20) is made from the base (27) and the two tie-rods (22, 23) which are joined together by assembly means (29).

4. - A clamping device according to claim 1, **characterized in that** the assembly means of the closure and bearing member (56) and the two tie-rods (22, 23) comprises two pins (26), each of the two pins (26) being forced into a hole (25) made at the end of the corresponding tie-rod (22, 23) and forced into a hole (59) made on the corresponding side of the closure and bearing member (56).

5. - A clamping device according to claim 3, **characterized in that** the assembly means of the base (27) and the two tie-rods (22, 23) comprises two pins (29), each of the two pins (29) being forced into a hole (28) made at the end of the corresponding tie-rod (22, 23) and forced into a hole (38) made on the corresponding side of the base (27).

6. - A clamping device according to claim 1, **characterized in that** the external clamping rod (19) is fastened to the base (21, 27) to constitute a one-piece component.

7. - A clamping device according to claim 1, **characterized in that** the external clamping rod (19) is mounted in a hole made through the base (21, 27), said external clamping rod (19) being provided with a head that abuts against said base (21, 27).

8. - A clamping device according to claim 1, **characterized in that** the closure and bearing member (56) includes at least two bearing uprights (57, 58) that face each other and are pressed against the external face (18) of the corresponding upright (12), each of the two bearing uprights (57, 58) receiving the assembly means with the end of the corresponding tie-rod (22, 23).

9. - A clamping device according to claim 1, **characterized in that** the intermediate bearing member (50) includes two bearing uprights (53, 54) that face each other and are pressed against the external face (17) of the corresponding upright (11) around the base (21, 27) of the bracket (20).

10. - A clamping device according to claim 1, **characterized in that** the axial retention assembly (47) includes an abutment with a nut and a look-nut that are screwed onto the threaded end of the external clamping rod (19).

11. - A clamping device according to claim 1, **characterized in that** the locking assembly (40) includes:
- an internal cam (41) fixed against rotation relative to the intermediate bearing member (50), and
- an external cam (42) that can be rotated by means of a clamping handle (45).

12. - A clamping device according to claim 1, **characterized in that**:
- the member is an automobile vehicle steering column body-tube (30) whose axis is the steering axis (3) and in which a steering shaft (1) is rotatably mounted;
- the support assembly (6) is connected to the chassis (10) of the vehicle;
- the body-tube (30) includes a build-in device between the two uprights (11, 12) of the support assembly 6);
- said build-in device consists:
. of a rectangular section inserted member (31) having a vertical portion (33) and two horizontal portions (34, 35) that are welded together to said body-tube (30), the vertical portion (33) having a bearing surface (36) pressed against the internal face (15) of the corresponding upright (11) of the support assembly (6), and
. of a solid inserted member (61) welded to said body-tube (60), the solid inserted member (61) having the internal face (62) that is pressed against said body-tube (60) and whose vertical external face is the bearing face (66) pressed against the internal face (16) of the other upright (12) of the support assembly.

13. - A clamping device according to claim 1, **characterized in that**:
- the member is an automobile vehicle steering column body-tube (60) whose axis is the steering axis (3) and in which a steering shaft (1) is rotatably mounted;
- the support assembly (6) is connected to the chassis (10) of the vehicle;
- the body-tube (60) includes a build-in device between the two uprights (11, 12) of the support assembly (6) ;
- said build-in device consists:
. of a solid inserted member (61) welded to said body-tube (60), the solid inserted member (61) having the internal face (62) that is pressed against said body-tube (60), and whose vertical external face is the bearing face (66) pressed against the internal face (16) of the corresponding upright (12) of the support assembly (6), and
. of a single wedge (93) ; said wedge being connected to and mounted directly on the internal face (15) of the other upright (11) of the support assembly (6), the wedge (93) having two guide faces (95, 96) inclined to each other and recessed on its external face (97);
. the corresponding upright (11) of the support assembly (6) also has two faces (111, 112) inclined to each other and projecting on its internal face (15), said projecting inclined faces (111, 112) cooperating with the recessed inclined faces (95, 96) of the wedge {93) to prevent rotation about the clamping axis (5).

## Patentansprüche

1. - Feststellvorrichtung für ein Verstellsystem (7) eines Teils (30, 60) gegenüber einer als feststehend betrachteten Stützeinheit (6), wobei das Teil (30, 60) eine Achse (3) hat und die Stützeinheit (6) aus zwei Stützen (11, 12) besteht, die durch ein Verbindungselement (13) miteinander verbunden sind, die beiden Stützen (11, 12) im Wesentlichen parallel zueinander sind und das Teil (30, 60) zwischen den beiden Stützen (11, 12) der Stützeinheit (6) angeordnet ist, so dass die beiden Stützen (11, 12) im Wesentlichen parallel zur Achse (3) des Teils (30, 60) sind; das Verstellsystem (7) wird in der gewählten Stellung mittels der Feststellvorrichtung blockiert, deren Klemmachse (5) im Wesentlichen senkrecht zu den beiden Stützen (11, 12) und der Achse (3) des Teils (30, 60) ist, wobei die Feststellvorrichtung Folgendes umfasst:
- einen Bügel (20), bestehend aus:
. einer Fußplatte (21, 27), angeordnet auf der Außenseite einer der Stützen (11), und
. zwei Zugstäben (22, 23), die über die beiden Stützen(11, 12) hinweggehen;
- ein Abschlusselement (56), angeordnet auf der Außenseite der anderen Stütze (12), wobei dieses Abschlusselement (56) die beiden Zugstäbe (22, 23) verbindet, **dadurch gekennzeichnet, dass**:
- das Abschlusselement (56) eine Abstützelement ist, das auf der Außenseite (18) der anderen Stütze (12) aufliegt, wobei dieses Abschluss- und Abstützelement (56) die beiden Zugstäbe (22, 23) mittels der Verbindungsmittel (26) verbindet;
- ein äußerer Festziehstift (19) auf die Fußplatte (21, 27) gesetzt ist und dessen Achse mit der Klemmachse (5) identisch ist;
- eine Blockiereinheit (40) auf den äußeren Festziehstift (19) aufgesetzt ist, der auf der Außenseite der Stütze (11) der Stützeinheit montiert ist (6) ;
- ein Andrückzwischenelement (50) auf den äußeren Festziehstift (19) aufgesetzt und zwischen der Fußplatte (21, 27) des Bügels (20) und der Blockiereinheit (40) angeordnet ist, wobei dieses Andrückzwischenelement (50) an der Außenseite (17) der Stütze (11) auf der Fußplatten-Seite (21, 27) des Bügels (20) anliegt;
- eine axiale Halteeinheit (47) für die Blockiereinheit (40) auf dem äußeren Festziehstift (19) montiert und befestigt ist und auf der Außenseite der Blockiereinheit (40) sitzt;
- wobei diese axiale Halteeinheit (47) in der Klemmachse (5) so eingestellt ist, dass in der Verriegelungsstellung der Feststellvorrichtung:
. die Blockiereinheit (40) einerseits an einer Außenseite (52) des Andrückzwischenelements (50) anliegt, das gegen die Außenseite (17) der Stütze (11) auf der Fußplatten-Seite (21, 27) des Bügels (20) zurückgedrückt wird und
. dass die Blockiereinheit (40) andererseits auf eine Innenseite der axialen Halteeinheit (47) drückt, um so am äußeren Festziehstift (19) zu ziehen, der den Bügel (20) zusammen mit dem Abschluss- und Abstützelement (56) mitnimmt, das sich an die Außenseite (18) der entsprechenden Stütze (12) anlegt und diese zurückdrückt, so dass die beiden Stützen (11, 12) zueinander geschoben werden, um die geforderte Klemmung sicherzustellen.

2. - Feststellvorrichtung nach Anspruch 1, **dadurch gekennzeichnet, dass** der Bügel (20) so ausgeführt ist, dass die Fußplatte (21) und die beiden Zugstäbe (22, 23) ein und dasselbe Teil als eine Einheit bilden.

3. - Feststellvorrichtung nach Anspruch 1, **dadurch gekennzeichnet, dass** der Bügel 20 aus der Fußplatte (27) und den beiden Zugstäben (22, 23) hergestellt ist, die durch Verbindungsmittel (29) miteinander verbunden sind.

4. - Feststellvorrichtung nach Anspruch 1, **dadurch gekennzeichnet, dass** die Verbindungsmittel des Abschluss- und Abstützelements (56) und der beiden Zugstäbe (22, 23) zwei Splinte (26) sind, von denen jeder unter Kraftaufwand in ein Loch (25) am Ende des jeweiligen Zugstabes (22, 23) und ein Loch (59) auf der zugehörigen Seite des Abschluss- und Abstützelements (56) eingeschoben ist.

5. - Feststellvorrichtung nach Anspruch 3, **dadurch gekennzeichnet, dass** die Verbindungsmittel der Fußplatte (27) und der beiden Zugstäbe (22, 23) zwei Splinte (29) sind, von denen jeder unter Kraftaufwand in ein Loch (28) am Ende des jeweiligen Zugstabes (22, 23) und ein Loch (38) auf der zugehörigen Seite der Fußplatte (27) eingeschoben ist.

6. - Feststellvorrichtung nach Anspruch 1, **dadurch gekennzeichnet, dass** der äußere Festziehstift (19) fest mit der Fußplatte (21, 27) verbunden ist, um ein und dasselbe Teil als eine Einheit zu bilden.

7. - Feststellvorrichtung nach Anspruch 1, **dadurch gekennzeichnet, dass** der äußere Festziehstift (19) in einem Durchgangsloch in der Fußplatte (21, 27) sitzt, wobei er einen Kopf hat, der an der Fußplatte (21, 27) ein Widerlager bildet.

8. - Feststellvorrichtung nach Anspruch 1, **dadurch gekennzeichnet, dass** das Abschluss- und Abstützelement (56) mindestens zwei Auflageschenkel (57, 58) umfasst, die einander gegenüberliegen und auf der Außenseite (18) der jeweiligen Stütze (12) aufliegen, wobei jeder der beiden Auflageschenkel (57, 58) die Verbindungsmittel zur Verbindung mit dem Ende des jeweiligen Zugstabes (22, 23) aufnimmt.

9. - Feststellvorrichtung nach Anspruch 1, **dadurch gekennzeichnet, dass** das Andrückzwischenelement (50) zwei Auflageschenkel (53, 54) umfasst, die einander gegenüberliegen und auf der Außenseite (17) der jeweiligen Stütze (11) aufliegen, indem sie sich um die Fußplatte (21, 27) des Bügels (20) herum legen.

10. - Feststellvorrichtung nach Anspruch 1, **dadurch gekennzeichnet, dass** die axiale Halteeinheit (47) ein Widerlager aus einer Schraube und einer Gegenschraube umfasst, die auf das Gewindeende des äußeren Festziehstiftes (19) geschraubt sind.

11. - Feststellvorrichtung nach Anspruch 1, **dadurch gekennzeichnet, dass** die Blockiereinheit (40) Folgendes umfasst:
- eine innere Nocke (41), die gegenüber dem Andrückzwischenelement (50) nicht verdrehbar ist, und
- eine äußere Nocke (42), die mittels des Feststellgriffs (45) drehbar ist.

12. - Feststellvorrichtung nach Anspruch 1, **dadurch gekennzeichnet, dass**:
- das Teil der Rohrkörper (30) der Lenksäule eines Automobiles ist, dessen Achse die Lenkachse (3) ist und in dem die Lenksäulenwelle (1) drehend montiert ist;
- die Stützeinheit (6) mit dem Fahrgestell (10) des Fahrzeugs verbunden ist;
- der Rohrkörper (30) eine Aufnahmevorrichtung zwischen den beiden Stützen (11, 12) der Stützeinheit (6) aufweist;
- die Aufnahmevorrichtung Folgendes umfasst:
. ein angesetztes Teil (31) mit rechteckigem Querschnitt aus einem vertikalen Abschnitt (33) und zwei horizontalen Abschnitten (34, 35), die beide an den Rohrkörper (30) angeschweißt sind, wobei der vertikale Abschnitt (33) eine Auflagefläche (36) hat, die sich an die Innenseite 15 der jeweiligen Stütze (11) der Stützeinheit (6) anlegt, und
. ein angesetztes massives Teil (61), das an den Rohrkörper (60) angeschweißt ist und eine Innenseite (62) aufweist, die am Rohrkörper (60) anliegt, und dessen vertikale Außenseite die Auflagefläche (66) ist, die an der Innenseite (16) der anderen Stütze (12) der Stützeinheit anliegt.

13. - Feststellvorrichtung nach Anspruch 1, **dadurch gekennzeichnet, dass**:
- das Teil der Rohrkörper (30) der Lenksäule eines Automobiles ist, dessen Achse die Lenkachse (3) ist und in dem die Lenksäulenwelle (1) drehend montiert ist;
- die Stützeinheit (6) mit dem Fahrgestell (10) des Fahrzeugs verbunden ist;
- der Rohrkörper (60) eine Aufnahmevorrichtung zwischen den beiden Stützen (11, 12) der Stützeinheit (6) aufweist;
- die Aufnahmevorrichtung Folgendes umfasst:
. ein angesetztes massives Teil (61), das an den Rohrkörper (60) angeschweißt ist und eine Innenseite (62) aufweist, die am Rohrkörper (60) anliegt, und dessen vertikale Außenseite die Auflagefläche (66) ist, die an der Innenfläche (16) der jeweiligen Stütze (12) der Stützeinheit (6) anliegt, und
. ein einziges und selbes Passstück (93), das mit der Innenseite (15) der anderen Stütze (11) der Stützeinheit (6) verbunden und direkt darauf gesetzt ist und zwei gegeneinander geneigte Führungsflächen (95, 96) aufweist, die als Vertiefung auf seiner Außenseite (97) ausgeführt sind (97);
. die entsprechende Stütze (11) der Stützeinheit (6) weist ebenfalls zwei gegeneinander geneigte Flächen (111, 112), die erhaben auf seiner Innenseite (15) ausgeführt sind, wobei diese erhabenen geneigten Flächen (111, 112) mit den vertieft ausgeführten geneigten Flächen (95, 96) des Passstücks (93) zusammenwirken, um das Nichtmitdrehen um die Klemmachse (5) sicherzustellen.
